# FASCICULE DE BREVET EUROPEEN

(11) **EP 3 387 802 B1**
(45) Date de publication et mention de la délivrance du brevet: **14.07.2021**
(21) Numéro de dépôt: 16819981.8
(22) Date de dépôt: 06.12.2016
(51) Int. Cl.: H04L 12/753, H04L 12/705, H04L 12/703

(54) **PROCÉDÉ ANTI-MICRO-BOUCLE PENDANT LA CONVERGENCE DE TABLES DE COMMUTATION**
VERFAHREN ZUR BEKÄMPFUNG VON MIKRO-LOOPING WÄHREND DER KONVERGENZ VON SCHALTTABELLEN
METHOD FOR COMBATING MICRO-LOOPING DURING THE CONVERGENCE OF SWITCHING TABLES

(30) Priorité: 07.12.2015 FR 1561950
(43) Date de publication de la demande: 17.10.2018
(73) Titulaire: ORANGE, 75015 Paris (FR)
(72) Inventeur: DECRAENE, Bruno, 92170 Vanves (FR)
(86) Numéro de dépôt international: PCT/FR2016/053234
(87) Numéro de publication internationale: WO 2017/098140

(56) Documents cités:
- WO-A1-03/071745
- FR-A1- 2 906 429

## Description

### 1. Domaine de l'invention

La demande d'invention se situe dans le domaine du routage de paquets de données dans un réseau de télécommunication comprenant des nœuds, chaque nœud ayant une connaissance au moins partielle de la topologie du réseau.

### 2. Etat de la technique antérieure

Plus particulièrement, l'invention se situe, sans s'y limiter, dans le contexte des réseaux IP (Internet Protocol, ou protocole Internet) et MPLS (Multi-Protocol Label Switching, ou commutation d'étiquette multi-protocole), constitués de routeurs acheminant des paquets IP ou MPLS et routant ces paquets de routeur en routeur, le long d'un chemin jusqu'à leurs destinations.

Lors d'une modification de l'état du réseau affectant un lien entre deux routeurs, c'est-à-dire suite à une panne de lien, un rétablissement de lien, ou un changement de la métrique d'un lien utilisée par les routeurs pour le calcul des routes, chaque routeur modifie ses tables de commutation (FIB, pour Forwarding Information Base, ou base d'informations de transfert), de manière non coordonnée. En effet, durant les opérations de re-routage qui font suite à une telle modification de lien, tous les routeurs ne mettent pas en place les nouvelles routes dans leur table de commutation exactement au même instant. Par conséquent des boucles de commutation temporaires, ou "micro-boucles", peuvent se produire entre un routeur utilisant encore une ancienne route, et un routeur voisin utilisant déjà la nouvelle route.

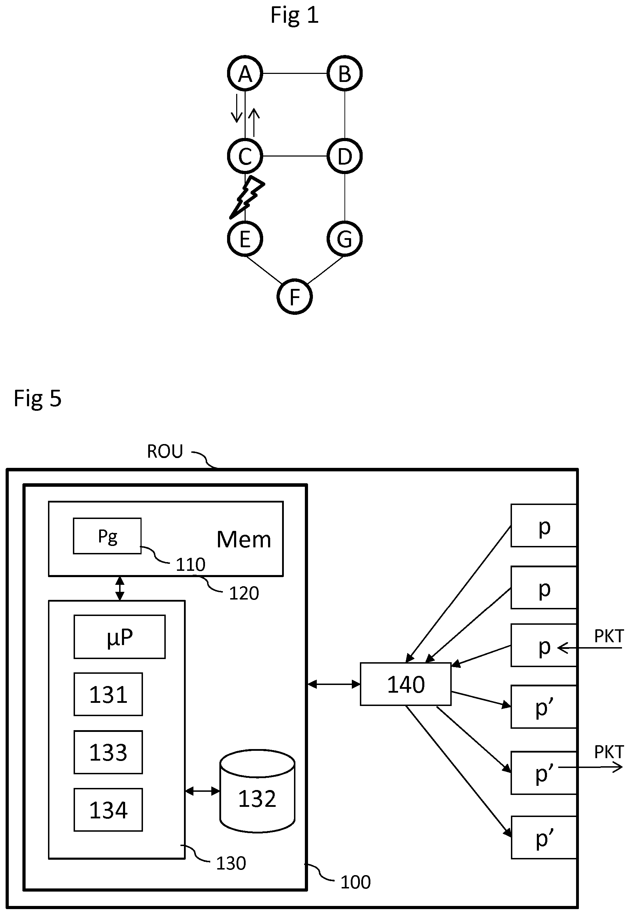

Ce phénomène de micro-boucle est illustré par la **figure 1**, où le routeur A émet vers C un paquet dont la destination finale est le routeur E. Le routeur C détectant une panne du lien entre lui-même et le routeur E, il met à jour sa table de routage et décide de re-router le paquet par une nouvelle route passant par les routeurs A, B, D, G, F, afin que le paquet puisse atteindre sa destination au routeur E malgré la panne. Mais tant que le routeur A n'a pas mis à jour sa propre table de routage pour joindre la destination E, le routeur A fera faire demi-tour au paquet en le renvoyant au routeur C. Le paquet enchaine donc les demi-tours entre les routeurs A et C, tant que les tables de routages des deux routeurs ne sont pas mises à jour, créant la micro-boucle. Il est à noter que selon les topologies, les micro-boucles peuvent mettre en jeu un nombre de routeurs supérieur à 2. Par exemple si la table de routage du routeur A est bien mise à jour mais pas celle du routeur D, le routeur D peut décider d'envoyer le paquet au routeur C pour atteindre le routeur E. Le routeur C enverra alors le paquet à nouveau au routeur A, et une boucle se forme ainsi entre les routeurs A, B, D et C.

Le document "draft-hegde-rtgwg-microloop-avoidance-using-spring-00", publié le 18 octobre 2015 sur le site Internet de l'IETF (Internet Engineering Task Force), présente un procédé selon lequel les routeurs attendent la convergence vers la topologie de re-routage, c'est-à-dire que chacun attend que tous aient achevé leur calcul individuel des nouvelles routes, avant d'émettre leur trafic sur celles-ci. Cette solution comporte plusieurs inconvénients. D'une part elle suppose que toutes les destinations sont couvertes par un mécanisme de re-routage d'urgence appelé FRR (Fast Re-Route, ou re-routage rapide), utilisé par les paquets en transit en attendant la convergence. D'autre part, ce procédé introduit un délai de re-routage supérieur ou égal au plus long des délais de re-calcul de l'ensemble des routeurs ce qui retarde l'utilisation du chemin optimal pour le trafic. Enfin, cette méthode ne fonctionne pas systématiquement, si survient avant la convergence une autre panne affectant un autre lien que le lien déjà affecté.

Le brevet WO 03/071745 présente une solution s'apparentant au "Fast Re-Route". Dans ce document, un tunnel de "bypass" est défini antérieurement à un événement affectant un routeur entre un point en amont et in point en aval de ce routeur. Des ressources du réseau sont réservées sur chacun des liens du tunnel de bypass pour secourir ledit chemin en cas de défaillance dudit routeur.

Un des buts de l'invention est de remédier à ces inconvénients de l'état de la technique.

### 3. Exposé de l'invention

L'invention vient améliorer la situation à l'aide d'un procédé de détermination d'un point de terminaison d'au moins un tunnel ou segment de tunnel, dans un réseau à commutation de paquets, le réseau comprenant un ensemble de routeurs et des liens entre eux, chaque lien ayant un coût associé, l'ensemble de routeurs et les liens formant une topologie du réseau dite antérieure, un routeur de transit compris dans l'ensemble recevant des paquets destinés à un routeur de sortie compris dans l'ensemble, un événement modifiant la topologie antérieure en une topologie du réseau dite postérieure, un chemin de secours entre le routeur de transit et le routeur de sortie étant calculé pour les paquets sur la base de la topologie postérieure, le procédé comprenant l'étape suivante, antérieure à l'événement :
- pour chacun des routeurs de l'ensemble, calcul d'un arbre dit initial, sur la base de la topologie antérieure, ledit arbre initial ayant pour racine ledit chacun des routeurs et ayant pour branches des chemins de coût minimum entre la racine et les autres routeurs de l'ensemble,
le procédé comprenant en outre au moins un cycle des étapes suivantes, postérieures à l'événement :
- sélection d'un routeur sur le chemin de secours, dit routeur de début,
- à partir du routeur de début, vers le routeur de sortie le long du chemin de secours, identification d'un routeur, dit dernier routeur commun, pour lequel tous les liens et routeurs y compris lui-même, entre le routeur de début et lui-même, sont communs au chemin de secours et à l'arbre initial associé au routeur de début, et, si ce dernier routeur commun est différent du routeur de début,
- détermination du point de terminaison du tunnel ou segment de tunnel comme étant le dernier routeur commun identifié, le tunnel ou segment de tunnel étant destiné à éviter aux paquets transitant entre le routeur de début et le dernier routeur commun identifié d'entrer dans une micro-boucle causée par l'événement.

Un tunnel ou un segment de tunnel dans un réseau à commutation de paquets permet d'éviter, aux paquets encapsulés, la consultation des tables de commutation des routeurs traversés par le tunnel, sauf pour le routeur de transit, où sont encapsulés les paquets et pour le routeur de fin, où ils sont dé-encapsulés. Selon la technique d'encapsulation utilisée par le routeur de transit, par exemple selon qu'un tunnel IP ou MPLS est utilisé, ou selon que du routage par segment dit "Segment Routing" est utilisé, le procédé de détermination selon l'invention permet respectivement soit d'emboiter les uns dans les autres des tunnels ayant des points de terminaison différents, soit de concaténer les uns derrière les autres des segments de tunnels ayant des points de terminaison différents.

Une table de commutation d'un routeur est consultée uniquement sur la base de l'entête du paquet du tunnel, les autres entêtes encapsulés restant cachés, et uniquement pour une seule destination : la destination du tunnel. Grâce au procédé de détermination selon l'invention, on choisit la destination de manière spécifique afin que cette destination ne soit pas impactée par la panne, ou plus généralement, par le changement de topologie. Son routage ne change pas et donc cette destination ne rentre pas dans une micro-boucle, sur le chemin de ce tunnel.

Un tel tunnel peut donc être utilisé indifféremment avant l'événement ou après l'événement, et ce même avant que le processus de convergence des tables de commutation des routeurs, déclenché par l'événement, ne soit terminé. De plus, si l'événement est une panne de lien ou de routeur ou de préfixe ou une augmentation de métrique d'un lien ou d'un préfixe, le procédé peut déterminer un tunnel ou un segment de tunnel qui évite les boucles de commutation, ou micro-boucles, même lorsqu'un deuxième événement survient avant que les arbres initiaux n'aient été recalculés sur la base de la topologie la plus récente.

Par coût, il faut entendre une métrique permettant de quantifier un degré d'inefficacité associé à l'utilisation du lien. En général, le coût est en rapport avec la distance entre deux routeurs, mais dans certains cas le coût peut être différent pour le même tronçon entre deux routeurs, selon la direction empruntée. Pour cette raison, un "lien" dans le contexte de l'invention est unidirectionnel, et son coût est associé à une seule des deux directions, celle empruntée par les paquets dans leur cheminement entre le routeur de transit et le routeur de sortie.

Selon un mode préféré de réalisation de l'invention, les étapes du procédé de détermination sont mises en œuvre par le routeur de transit.

Selon un mode de réalisation alternatif, ces étapes peuvent être mises en œuvre par un équipement de contrôle du réseau, qui, sans nécessairement être un routeur, a la visibilité de la topologie du réseau comme s'il était un routeur. C'est le cas par exemple d'un SDN contrôler (équipement de contrôle d'un réseau défini par logiciel, ou Software Defined Network, en anglais).

Selon un aspect de l'invention, le chemin de secours est de coût minimum.

Grâce à cet aspect, on minimise le coût du chemin de secours, ce qui est en général l'objectif recherché, donc la route optimale. De plus, les tunnels utilisés suivent le chemin de moindre coût également, donc en utilisant la même métrique pour le chemin de secours que les tunnels utilisés, on a plus de chance que les tunnels suivent naturellement le chemin que l'on souhaite ce qui peut aussi minimiser le nombre de tunnels à utiliser.

Selon un aspect de l'invention, le routeur de début sélectionné lors du premier cycle est le routeur de transit.

Grâce à cet aspect, les tunnels déterminés peuvent commencer dès le routeur de transit.

Selon un aspect de l'invention, le routeur de début sélectionné lors du premier cycle est un routeur adjacent au routeur de transit sur le chemin de secours.

Le routage sur le lien entre le routeur de transit et son voisin immédiat sur le chemin de secours n'est pas affecté par la panne, et il n'est donc pas nécessaire d'inclure ce lien dans le tunnel. Grâce à cet aspect il est donc possible de décaler d'un saut de routeur le début du tunnel à déterminer, ce qui peut lui permettre de se terminer un peu plus loin, ce qui peut minimiser le nombre total de tunnels à déterminer et nécessaires le long de tout le chemin de secours.

Selon un aspect de l'invention, le routeur de début sélectionné est le point de terminaison déterminé lors du cycle précédent, si le cycle n'est pas le premier.

Grâce à cet aspect il est possible de déterminer des tunnels, qui, lorsqu'ils sont encapsulés les uns dans les autres sur le chemin de secours, permettent de faire transiter les paquets à travers une suite ininterrompue de tunnels. Le procédé de détermination est purement local au routeur de transit et ne nécessite donc aucun échange de signalisation avec les autres routeurs pour connaître l'état de leurs tables de commutation, particulièrement leur état d'avancement dans le processus de convergence. Aucune synchronisation entre les routeurs n'est nécessaire, ni aucune fonction particulière, hormis la capacité de dé-encapsuler les paquets, pour un routeur qui est au point de terminaison d'un tunnel, ou pour un routeur précédant un point de terminaison dans la cas particulier de MPLS avec la fonction "Penultimate Hop Popping".

Selon un aspect de l'invention, si le dernier routeur commun identifié est le routeur de début, alors le point de terminaison est déterminé comme étant le routeur adjacent au routeur de début sur le chemin de secours, vers le routeur de sortie.

Grâce à cet aspect, si lors d'un cycle donné l'étape d'identification ne trouve aucun routeur, autre que le routeur de début, qui soit commun au chemin de secours et à l'arbre initial associé au routeur de début, il faut alors déterminer pour ce cycle un tunnel non routé selon le plus court chemin, c'est-à-dire d'un seul saut, entre le routeur de début et le routeur adjacent sur le chemin de secours. Autrement dit, le point de terminaison de tunnel déterminé par ce cycle est le routeur immédiatement voisin sur le chemin de secours, en allant vers le routeur de sortie. De cette façon, le procédé ne bloque pas, et peut progresser même si le lien vers le routeur adjacent est absent de l'arbre initial du routeur de début par exemple en raison de son coût élevé.

Selon un aspect de l'invention, le procédé de détermination comprend en outre une étape d'ajout où, pour chaque point de terminaison déterminé lors d'un cycle, une instruction est ajoutée à une table de commutation, l'instruction étant une instruction d'encapsulation des paquets à destination du routeur de sortie dans un tunnel correspondant au point de terminaison.

Grâce à cet aspect, les paquets destinés au routeur de sortie, avant d'être émis par le routeur de transit, consultent la table de commutation du routeur de transit et sont soumis à une encapsulation dans le(s) tunnel(s), dont le(s) point(s) de terminaison est(sont) déterminé(s) par le procédé de détermination selon l'invention. Si plusieurs cycles du procédé sont exécutés, les paquets sont soumis, dans l'ordre inverse des cycles, à une suite d'encapsulations dans les tunnels correspondant aux points de terminaison déterminés. On comprend que les paquets arrivent au routeur de sortie en passant par le point de terminaison de chacun des tunnels déterminés.

Ainsi, les paquets transitant entre le routeur de transit et le routeur de sortie empruntent une suite de tunnels leur évitant toutes les micro-boucles causées par l'événement sur le chemin de secours.

Si le nombre de tunnels encapsulés les uns dans les autres devient trop élevé pour les capacités du routeur de transit, il est possible de n'utiliser que les N premiers tunnels, ou uniquement les Np premiers et les Nd derniers, et ainsi limiter partiellement les risques de micro-boucles. Les valeurs de N, Np ou Nd dépendent de la capacité du routeur de transit réalisant les encapsulations.

Selon un aspect de l'invention, le type du tunnel fait partie d'un groupe comprenant au moins:
- tunnel MPLS;
- tunnel "Segment Routing";
- tunnel IP.

Selon un aspect de l'invention, l'événement modifiant la topologie antérieure est dit événement négatif et fait partie d'un groupe comprenant:
- augmentation du coût associé à au moins un lien ou à un préfixe IP;
- disparition d'au moins un lien ou d'un préfixe IP.

Grâce à cet aspect, si par exemple une opération de maintenance réduit le débit d'un lien pour provoquer un re-routage avant la suppression du lien, le coût associé à son utilisation est augmenté dans la nouvelle topologie.

Si une panne sur un lien survient et le rend totalement inutilisable, il n'apparait plus dans la nouvelle topologie. Cela peut aussi être vu comme si son coût était devenu trop élevé pour que son utilisation soit possible.

Si c'est un routeur qui est impacté par l'événement, ce sont les liens qui lui sont attachés qui sont impactés. Par exemple si un routeur tombe en panne et devient inutilisable, tous les liens qui mènent vers lui disparaissent de la nouvelle topologie.

Dans le contexte de l'invention, par "préfixe IP", il faut entendre "préfixe IP annoncé par plusieurs routeur", ou en anglais, "multi-homed IP prefix".

Selon un aspect de l'invention, l'événement modifiant la topologie antérieure est dit événement positif et fait partie d'un groupe comprenant:
- diminution du coût associé à au moins un lien ou à un préfixe IP;
- apparition d'au moins un lien ou d'un préfixe IP multi-homé.

Grâce à cet aspect, par exemple si une opération de maintenance augmente le débit du lien, le coût associé à son utilisation est diminué dans la nouvelle topologie.

Si une opération de maintenance ou de réparation établit ou ré-établit un nouveau lien entre deux routeurs, il est ajouté à la nouvelle topologie.

Si c'est un routeur qui est impacté par l'événement, ce sont les liens qui lui sont attachés qui sont impactés. Par exemple si un routeur est réparé après avoir été inutilisable, tous les liens qui mènent vers lui apparaissent dans la nouvelle topologie.

Selon un aspect de l'invention, l'événement est un événement négatif et les cycles sont exécutés entièrement même si un nouvel événement négatif modifie la topologie postérieure avant la fin desdits cycles.

Si un second événement survient générant un nouveau calcul des tables de commutation, la topologie sur laquelle s'est basé le calcul des arbres initiaux n'est plus celle d'avant ce second événement. Si le premier événement est de type négatif, une propriété intéressante du procédé est que les précédents arbres dits initiaux peuvent encore être utilisés tout en évitant les micro-boucles créés par le premier ou par le second événement. Le seul inconvénient éventuel est qu'un nombre plus élevé de tunnels peut être nécessaire.

En effet, lorsque les événements successifs sont des événements de type négatif, la partie de l'arbre de plus court chemin (SPT) situé avant le(s) élément(s) en panne, ne sont pas impactés par la ou les pannes. Lorsque des éléments, liens ou routeurs, sont retirés de l'arbre, les chemins ne peuvent que s'allonger, donc les plus courts chemins avant la panne restent les plus courts chemins. Donc la partie de l'arbre située entre la racine et le premier élément avant la panne peut continuer d'être utilisée. Cette propriété ne dépend pas du nombre de pannes. Néanmoins, plus le nombre de pannes est élevé, plus l'arbre utilisable se raccourcit.

On comprend que le procédé selon l'invention est très robuste, car son efficacité à éviter les micro-boucles résiste aussi à une multitude de procédures de convergence accompagnant des événements de type négatif, même très rapprochées dans le temps.

Par contre, si le premier événement est un événement de type positif (apparition de lien ou diminution de coût d'un lien), alors il est nécessaire que les arbres initiaux utilisés pour l'identification du point de terminaison de tunnels soient ceux qui correspondent à la topologie antérieure au dernier événement en date, et non à une version précédente de cette topologie, car l'apparition d'un nouvel élément dans l'arbre peut permettre de trouver des chemins plus courts dans tout l'arbre. De plus, il n'y a pas moyen d'identifier une partie de l'arbre avant l'événement car l'élément ajouté suite à l'événement peut ne pas figurer dans cet arbre.

Il est à noter que si le second événement suivant un événement positif est un événement négatif, le recours à une solution de Fast ReRoute peut permettre de protéger le trafic pendant le temps de calcul des arbres initiaux.

Par commodité, c'est la distance entre routeurs est utilisée dans les exemples ci-dessus pour représenter le coût d'un lien, mais ces exemples s'appliquent également à d'autres types de coût.

Les différents aspects du procédé de détermination qui viennent d'être décrits peuvent être mis en œuvre indépendamment les uns des autres ou en combinaison les uns avec les autres.

L'invention concerne également un dispositif de détermination d'un point de terminaison d'au moins un tunnel dans un réseau à commutation de paquets, le réseau comprenant un ensemble de routeurs et des liens entre eux, chaque lien ayant un coût associé, l'ensemble de routeurs et les liens formant une topologie du réseau dite antérieure, un point d'encapsulation dudit au moins un tunnel étant un routeur de transit recevant des paquets destinés à un routeur de sortie, un événement modifiant la topologie antérieure en une topologie du réseau dite postérieure, un chemin de secours de coût minimum étant calculé pour les paquets sur la base de la topologie postérieure, le dispositif comprenant une mémoire et un processeur apte à, et configuré pour, antérieurement à l'événement :
- pour chacun des routeurs de l'ensemble, calculer un arbre dit initial, sur la base de la topologie antérieure, ledit arbre initial ayant pour racine ledit chacun des routeurs et ayant pour branches des chemins de coût minimum entre la racine et les autres routeurs de l'ensemble,
- mémoriser les arbres initiaux calculés dans la mémoire,
le processeur étant en outre apte à, et configuré pour, postérieurement à l'événement :
- sélectionner un routeur sur le chemin de secours, dit routeur de début,
- à partir du routeur de début, vers le routeur de sortie le long du chemin de secours, identifier un routeur, dit dernier routeur commun, pour lequel tous les liens et routeurs y compris lui-même, entre le routeur de début et lui-même, sont communs au chemin de secours et à l'arbre initial associé au routeur de début,
- déterminer comme point de terminaison du tunnel le dernier routeur commun identifié, le tunnel étant destiné à éviter aux paquets transitant entre le routeur de début et le dernier routeur commun identifié d'entrer dans une micro-boucle causée par l'événement.

Ce dispositif, apte à mettre en œuvre dans tous ses modes de réalisation le procédé de détermination d'un point de terminaison d'au moins un tunnel dans un réseau à commutation de paquets, qui vient d'être décrit, peut être compris dans un routeur de transit, ou dans un équipement contrôleur de réseau.

L'invention concerne encore un routeur de transit dans un réseau à commutation de paquets, apte à acheminer des paquets, le réseau comprenant un ensemble de routeurs et des liens entre eux, chaque lien ayant un coût associé, l'ensemble de routeurs et les liens formant une topologie du réseau dite antérieure, le routeur de transit recevant des paquets destinés à un routeur de sortie, et étant un point d'encapsulation d'un tunnel, un événement modifiant la topologie antérieure en une topologie du réseau dite postérieure, un chemin de secours de coût minimum étant calculé pour les paquets sur la base de la topologie postérieure, le routeur de transit comprenant un dispositif de détermination conforme à celui qui vient d'être décrit.

Ce routeur de transit peut être n'importe quel équipement ayant la connaissance de la topologie du réseau et commutant des paquets, en particulier un routeur IP ou MPLS.

L'invention concerne aussi un contrôleur de réseau apte à connaître la topologie d'un réseau à commutation de paquets et à contrôler des tables de commutation dans des routeurs, le réseau comprenant un ensemble de routeurs et des liens entre eux, chaque lien ayant un coût associé, l'ensemble de routeurs et les liens formant une topologie du réseau dite antérieure, un routeur de transit recevant des paquets destinés à un routeur de sortie, et étant un point d'encapsulation d'un tunnel, un événement modifiant la topologie antérieure en une topologie du réseau dite postérieure, un chemin de secours de coût minimum étant calculé pour les paquets sur la base de la topologie postérieure, le contrôleur de réseau comprenant un dispositif de détermination conforme à celui qui vient d'être décrit.

Ce contrôleur de réseau peut par exemple être un "SDN controler" (équipement de contrôle d'un réseau défini par logiciel, ou Software Defined Network, en anglais).

L'invention concerne aussi un programme d'ordinateur comprenant des instructions pour la mise en œuvre des étapes du procédé de détermination d'un point de terminaison d'au moins un tunnel dans un réseau à commutation de paquets qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :
- la figure 1 présente de façon schématique le phénomène d'une micro-boucle entre plusieurs routeurs,
- la figure 2 présente un exemple de mise en œuvre du procédé de détermination d'un point de dé-encapsulation d'au moins un tunnel dans un réseau à commutation de paquets, selon un mode de réalisation particulier de l'invention,
- la figure 3 présente une étape du procédé de détermination, l'étape de calcul et de mémorisation des arbres SPT, en utilisant comme exemple la topologie déjà utilisée dans la figure 1,
- la figure 4 présente des cycles de détermination d'un point de dé-encapsulation selon un aspect du procédé de détermination, en utilisant comme exemple la topologie déjà utilisée dans la figure 1,
- la figure 5 présente un exemple de structure d'un dispositif de détermination d'un point de dé-encapsulation d'au moins un tunnel dans un réseau à commutation de paquets, selon un aspect de l'invention.

### 5. Description détaillée d'au moins un mode de réalisation de l'invention

Dans la suite de la description, on présente des exemples de modes de réalisation de l'invention se basant sur des tunnels (cas tunnel) ou sur des segments de tunnels (cas segment).

Les tunnels peuvent être des tunnels IP tels que IP-in-IP (RFC 2003), GRE (RFC 2784), L2TP (RFC 2661) ou L2TPv3 (RFC 3931), ou des tunnels MPLS (RFC 3031) par exemple établis par le protocole LDP (RFC 5036).

Les segments de tunnel peuvent être des segments dits SR (Segment Routing, document "draft-ietf-spring-segment-routing" de l'IETF), entre des routeurs dits IGP (Interior Gateway Protocol, document "draft-ietf-isis-segment-routing-extensions", "draft-ietf-ospf-segment-routing-extensions" ou "draft-ietf-ospf-ospfv3-segment-routing-extensions" de l'IETF selon le type d'IGP utilisé).

L'hypothèse est faite qu'un routeur connait la topologie du réseau, par exemple à l'aide des protocoles IS-IS (RFC 1195), OSPFv2 (RFC 2328), OSPFv3 (RFC 5340), ou BGP-LS (document "draft-ietf-idr-le-distribution" de l'IETF).

Les routeurs d'un réseau et les liens entre eux forment une topologie.

Par rapport à un routeur donné dans cette topologie, appelé racine, on appelle un arbre SPT (de l'anglais "Shortest Path Tree", ou "arbre de plus court chemin" en français) l'arbre partant de la racine vers chacun des autres routeurs, dont les branches empruntent le plus court chemin. Dans la réalité des réseaux de communication, ce n'est pas la distance entre deux routeurs qui importe mais le coût du lien entre eux. Ce sont donc en fait les branches empruntant le chemin le moins coûteux, mais par commodité de langage on parle d'arbre SPT.

Dans le cas tunnel, on suppose qu'un routeur est capable d'utiliser un tunnel vers n'importe qu'elle destination/routeur dans le réseau. Les détails de réalisation dépendent du type de tunnel utilisé, IP ou MPLS par exemple.

Dans le cas segment, un routeur de type SR (de l'anglais "Segment Routing", ou "routage par segment" en français) est un routeur apte à utiliser dans le réseau un ou plusieurs tunnels préétablis entre deux routeurs quelconques de la topologie, l'un de ces routeurs pouvant être lui-même. Ces tunnels préétablis sont appelés segments dans la terminologie Segment Routing.

Un tunnel force le chemin d'un paquet dans le réseau. On comprend qu'un routeur SR ou non-SR a la capacité, si le tunnel est adéquatement déterminé, d'éviter, lors du routage des paquets qu'il émet dans le tunnel, la consultation des tables de routage des routeurs intermédiaires entre le routeur constituant le début du tunnel et le routeur constituant la fin du tunnel. Ceci est particulièrement intéressant lorsque ces tables de routage ne sont pas synchronisées entre elles, ce qui est le cas notamment pendant la phase de mise à jour des tables de routage consécutive à une modification de la topologie, car tous les routeurs ne mettent pas à jour leur table de routage en même temps. Une modification de topologie peut être due à une panne de lien ou de routeur, une réparation ou une installation de lien ou de routeur, etc.

C'est durant cette phase de mise à jour, aussi appelée convergence, qu'apparaissent des micro-boucles, que des tunnels adéquatement déterminés peuvent éviter.

Dans le cas tunnel, en utilisant un ou plusieurs tunnels IP consécutifs, chacun acheminé selon les tables de commutation IP existantes, il n'est pas nécessaire de créer des états de routage spécifiques ou supplémentaires. La difficulté reste de déterminer la liste de tunnels à utiliser consécutivement, de manière à suivre le chemin souhaité.

Dans le cas segment, le routage par segment SR permet d'utiliser des tunnels sans créer d'état de routage spécifique dans le réseau en combinant l'utilisation consécutive de plusieurs segments préexistants. La difficulté reste de déterminer la liste de segments à utiliser consécutivement, de manière à suivre le chemin souhaité.

Grâce entre autres à des calculs effectués avant une panne, l'invention permet de déterminer adéquatement ces tunnels ou ces segments, et ce très rapidement après la panne.

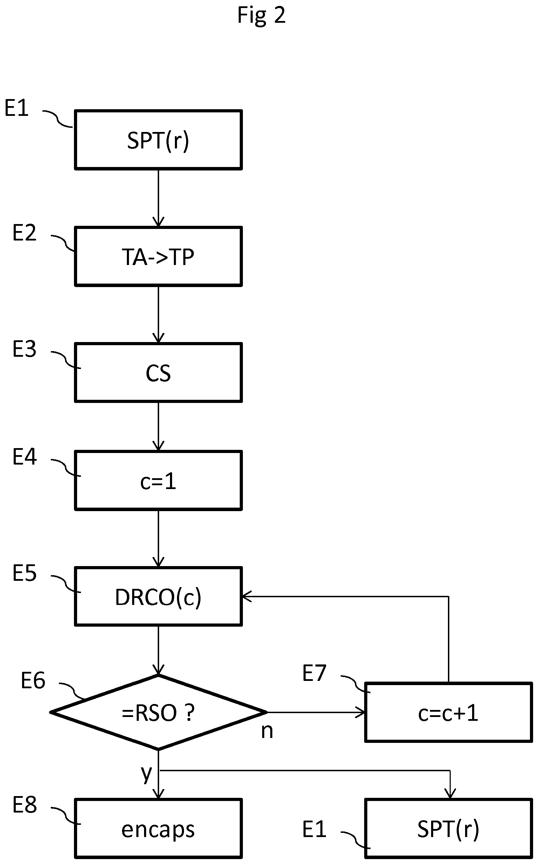

La **figure 2** présente un exemple de mise en œuvre du procédé de détermination d'un point de terminaison d'au moins un tunnel dans un réseau à commutation de paquets, selon un mode de réalisation particulier de l'invention.

Ce procédé de détermination peut être englobé dans un procédé plus large permettant à des paquets d'être émis par un routeur RTR de transit vers un routeur RSO de sortie.

Lors d'une étape E1 antérieure à un événement, le routeur RTR calcule et mémorise l'arbre SPT de chacun des N routeurs de la topologie TA, noté SPT(r), r = 1 à N.

Lors d'une étape E2, un événement modifie la topologie TA en une topologie TP, postérieure à l'événement. Dans la topologie TP calculée et mémorisée par le routeur RTR lors de cette étape, un ou plusieurs liens peuvent avoir disparu, être apparu, ou avoir eu leur coût modifié, par rapport à la topologie TA. Le routeur RTR a connaissance du changement de topologie par exemple à l'aide d'un mécanisme connu tel que par exemple un de ceux mentionnés plus haut.

Lors d'une étape E3, le routeur RTR calcule et mémorise le chemin CS le moins couteux entre le routeur RTR et le routeur RSO dans la topologie TP.

Lors d'une étape E4, le routeur RTR initialise un compteur de cycles c à 1, et sélectionne un routeur RDE(c) dit "de début" comme étant lui-même, c'est-à-dire le routeur RTR. Ceci permet de faire débuter le tunnel dès le routeur RTR de transit qui émet les paquets vers le routeur RSO de sortie.

Dans une variante optionnelle de l'étape E4, le routeur RTR sélectionne comme routeur de début RDE(c=1) lors du premier cycle le routeur adjacent au routeur RTR sur le chemin de secours. Le routage sur le lien entre le routeur RTR et son voisin immédiat sur le chemin de secours n'est pas affecté par l'événement, et le fait de décaler d'un saut de routeur le début du tunnel dont le point de terminaison est à déterminer, peut permettre d'aller plus loin dans le chemin CS et minimiser le nombre total de tunnels nécessaires.

Lors d'une étape E5, le routeur RTR identifie et mémorise le routeur DRCO(c), qui est le dernier routeur commun au chemin CS et à l'arbre SPT du routeur RDE(c), en partant du routeur RDE(c) et en allant vers le routeur RSO.

Dans le cas tunnel, une des adresses IP, ou l'adresse IP du routeur DRCO(c) est la destination du tunnel débutant au routeur de transit.

Dans le cas segment, le routeur DRCO(c) est le point de terminaison d'un segment débutant au routeur de début. Ce segment est le segment de destination DRCO(c), qui peut être un "node segment", c'est-à-dire un "prefix segment" identifiant un nœud, ou être un "prefix segment".

Dans le cas particulier où DRCO(c) est égal à RDE(c), il n'existe pas de de tunnel ou de segment de plus court chemin permettant d'avancer le long du chemin CS. Dans ce cas, le routeur RDE(c) est positionné au routeur voisin de DRCO(c) sur le chemin CS et un tunnel ou un segment d'un seul saut est utilisé, permettant de traverser un seul lien.

Dans le cas tunnel, il s'agit d'utiliser comme adresse de destination l'adresse IP du routeur DRCO(c) sur l'interface commune aux routeurs RDE(c) et DRCO(c).

Dans le cas segment, il s'agit d'utiliser un segment d'adjacence (Adjacency Segment).

Lors d'une étape E6, le routeur RTR détermine pour le cycle courant "c" que le routeur DRCO(c) est le point de terminaison, par exemple en ajoutant un identifiant du routeur DRCO(c) à une liste de points de terminaison. Le routeur RTR vérifie ensuite si le routeur DRCO(c) est le routeur RSO. Si c'est le cas, la liste des points de terminaison est entièrement déterminée puisqu'on a atteint le routeur de sortie RSO. Le routeur RTR exécute alors une étape E8 d'encapsulation, décrite plus bas.

Si ce n'est pas le cas, lors d'une étape E7 le routeur RTR sélectionne le routeur RDE(c+1) dit "de début" comme étant le routeur DRCO(c), incrémente le compteur de cycles c, et repasse à l'étape E5. Ceci permet de démarrer un nouveau cycle de détermination du prochain point de terminaison.

Lors de l'étape E8, le routeur RTR encapsule les paquets,
- dans le cas tunnel, dans les "c" tunnels déterminés lors des cycles du procédé dont les étapes viennent d'être décrites,
- et dans le cas segment, dans le tunnel constitué par les "c" segments déterminés lors des cycles du procédé dont les étapes viennent d'être décrites.

Dans le cas où le routeur RTR a reçu des paquets IP, le dernier segment n'est pas nécessaire car l'adresse IP destination suffit. Dans le cas où le routeur RTR a reçu des paquets MPLS, ce dernier segment est nécessaire pour assurer la continuité du segment/label correspondant au label du paquet reçu.

Dans le cas tunnel, les tunnels sont utilisés successivement dans l'ordre inverse de celui de la détermination de leur point de terminaison.

Dans le cas segment, les segments sont utilisés successivement dans le même ordre que celui de la détermination de leur point de terminaison.

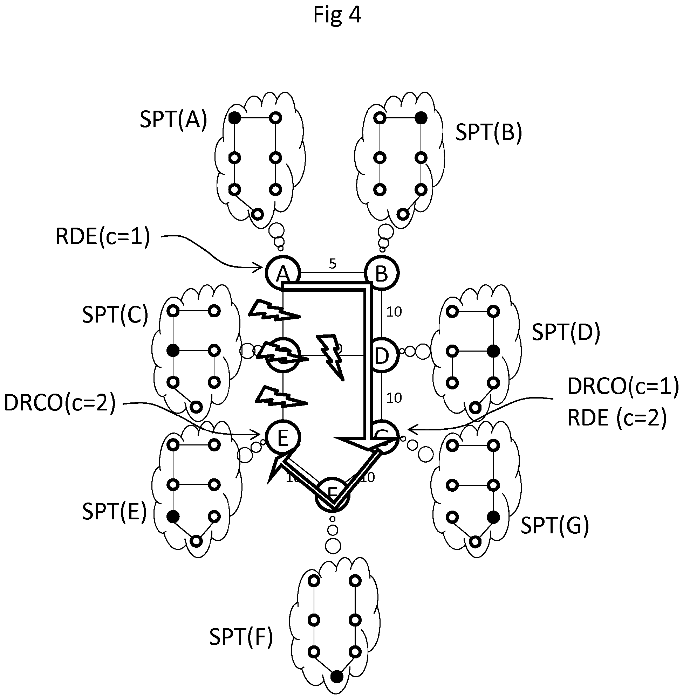

Dans le cas tunnel, par exemple dans la figure 4, deux cycles ont été nécessaires, le premier tunnel utilisé est à destination du routeur DRCO(1) (le routeur G) et le second tunnel à destination du routeur DRCO(2) (le routeur E). Sur les paquets reçus, le routeur RTR va d'abord encapsuler le paquet dans le tunnel à destination du routeur E, puis encapsuler le paquet résultant dans le tunnel à destination du routeur G. Ainsi, le paquet sera d'abord acheminé vers le routeur G en utilisant ce premier tunnel. Puis une fois arrivé au routeur G le premier tunnel sera terminé en dé-encapsulant le paquet interne. Ce paquet interne est le paquet du tunnel à destination du routeur E.

Dans le cas segment, toujours en prenant pour exemple illustratif la figure 4, deux cycles ont été nécessaires: le premier segment est déterminé comme étant à destination du routeur DRCO(1) c'est-à-dire le routeur G, et le second segment est déterminé comme étant à destination du routeur DRCO(2) c'est-à-dire le routeur E.

Dans le cas où le routeur RTR a reçu des paquets MPLS, cela se traduit par supprimer le "label" reçu et pousser 2 "labels" sur le paquet : le "label" externe ("outer label") est celui du premier segment, le "label" interne ("inner label") est celui du second segment.

Dans le cas où le routeur RTR transmet des paquets IP, il programme l'entrée suivante dans sa table de commutation IP (FIB) :
IP(E) → PUSH ("label" du premier segment vers G)

Dans le cas où le routeur RTR transmet des paquets MPLS, il programme l'entrée suivante dans sa table de commutation MPLS (LFIB) :
Label (E) → SWAP ("label" du second segment vers E) + PUSH ("label" du premier segment vers G),
L'opération de SWAP est fonctionnellement identique à une suppression du label reçu et à en pousser un autre.

En prévision d'un futur événement modifiant la topologie TP, dès qu'est terminé le dernier cycle de détermination des points de terminaison comprenant les étapes E5, E6 et E7, c'est-à-dire dès que le point de terminaison est déterminé comme étant le routeur RSO de sortie, le routeur RTR recalcule et re-mémorise l'arbre SPT de chacun des N routeurs, noté SPT(r), r = 1 à N, mais cette fois sur la base de la topologie TP qui est devenue la topologie antérieure par rapport au futur événement, lors d'un retour à l'étape E1. Il faut noter que ce retour à l'étape E1, qui est une étape de préparation, en prévision d'une prochaine panne par exemple, est moins urgent que toutes les étapes précédentes dont le but est de réagir au plus vite au changement de topologie de TA vers TP.

Ceci permet au routeur RTR d'être prêt, dès que se produit un nouvel événement, à déterminer à nouveau des points de terminaison adéquats, simplement en exécutant les mêmes étapes E2 à E8. En effet, un des avantages du procédé selon l'invention est que les ressources et les temps de calculs sont surtout nécessités par l'étape E1 (qui se déroule en prévision d'une panne donc en général avant la panne), ce qui les minimise pour les étapes E2 à E8, plus rapides et moins consommatrice en ressources.

Mais il peut arriver que ce nouvel événement modifiant la topologie TP survienne pendant le déroulement du procédé. Plusieurs cas peuvent se présenter :
- Si le nombre de routeurs dans le réseau est faible, ou si le processeur du routeur de transit est puissant, une étape de re-calcul des arbres SPT avant de reprendre le procédé peut ne pas être pénalisante.
- Si l'événement précédent modifiant la topologie TA en TP était un évènement de type négatif (panne de lien(s), panne de nœud(s), augmentation de coût de lien(s)), alors il n'est pas nécessaire de recalculer les arbres SPT car les points de terminaison calculés restent valables.
- Si l'événement précédent était un évènement de type positif ((ré)-établissement d'un lien(s), d'un nœud, diminution d'un coût de liens(s)), alors il est nécessaire de recalculer les arbres SPT pour être certain d'éviter toutes les micro-boucles. Sans ce re-calcul, quelques micro-boucles pourront éventuellement être évitées, mais pas toutes avec certitude.

Il est à noter qu'après écoulement d'une durée prédéterminée et suffisamment longue pour que soit achevée la convergence des tables de routage de tous les routeurs impactés par le dernier événement en date, le routeur RTR de transit peut supprimer les encapsulations des paquets dans les tunnels ou segments dont les points de terminaison ont été déterminés par le procédé.

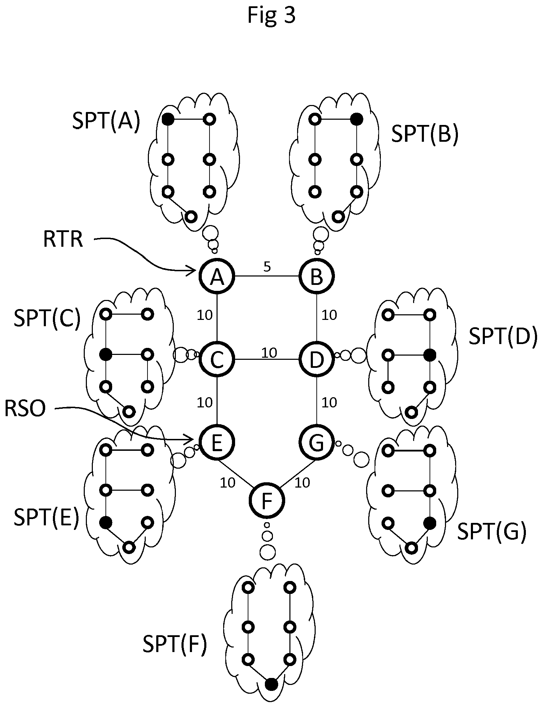

La **figure 3** présente l'étape E1 de calcul et de mémorisation des arbres SPT, en utilisant comme exemple la topologie déjà utilisée dans la figure 1.

Le routeur RTR de transit est le routeur A et le routeur RSO de sortie est le routeur E. Le routeur RTR calcule les arbres SPT(r), r = A, B, C, D, E, F, G. Chaque arbre SPT est calculé et mémorisé par le routeur RTR, c'est-à-dire par le routeur A, mais par commodité, sur la figure 3, les SPT sont illustrés par un nuage relié par des bulles à son routeur racine, lui-même illustré par un point noir dans le nuage, les autres routeurs étant illustrés par un point évidé.

Plusieurs façons de mémoriser les arbres SPT sont possibles. Afin de stocker de façon efficace ces structures de données qui peuvent consommer une grande quantité de mémoire pour un grand réseau, et qui sont susceptibles d'être fréquemment mises à jour, il existe des méthodes vectorielles permettant de stocker un seul graphe générique représentant la topologie TA du réseau de routeurs. Par exemple, le bit "i" d'un lien est mis à 1 quand ce lien est utilisé par le SPT(i), ou est mis à 0, quand ce lien n'est pas utilisé par le SPT(i). De ce fait, dans un réseau de R routeurs, il n'est pas nécessaire de mémoriser R structures d'arbre, mais une seule structure de graphe avec un vecteur de R bits par lien.

La **figure 4** présente les cycles de détermination d'un point de terminaison selon un aspect du procédé, en utilisant comme exemple la topologie déjà utilisée dans la figure 1.

Le routeur RTR de transit est le routeur A et le routeur RSO de sortie est le routeur E. Dans cet exemple le routeur C tombe en panne lors de l'étape E2. Non seulement le routeur C n'est plus présent dans la nouvelle topologie TP postérieure à l'événement, mais les liens C-A, C-D et C-E non plus ne sont plus présents dans la nouvelle topologie TP.

Lors de l'étape E3 le chemin de secours CS, non illustré, est calculé et mémorisé. Le chemin CS est le chemin de coût minimum entre les routeurs RTR et RSO dans la topologie TP. Dans la figure 4 comme dans la figure 3, les nombres 5, 10, 10, etc. sont des exemples de valeurs représentant le coût des différents liens. Le chemin CS débute au routeur A, et passe dans l'ordre, par les routeurs B, D, G, et F, pour finir au routeur E.

Lors de l'étape E4, le routeur RDE de début pour le premier cycle de détermination (c=1) est le routeur RTR, c'est-à-dire le routeur A.

Lors de l'étape E5 du premier cycle, à partir du routeur RDE(c=1), vers le routeur RSO de sortie, le routeur RTR identifie le routeur DRCO(c=1). DRCO(c=1) est le dernier routeur sur le chemin CS de secours, entre RDE(c=1) et RSO pour lequel tous les liens et routeurs y compris DRCO(c=1), entre le routeur RDE(c=1) et DRCO(c=1), sont communs au chemin CS de secours et à l'arbre SPT(RDE(c=1)). C'est-à-dire, dans la figure 4, commun au chemin A-B-D-G-F-E et à l'arbre SPT(A). Dans cet exemple et pour ce premier cycle, il s'agit du routeur G.

Lors de l'étape E6, le routeur RTR vérifie si le routeur DRCO(c=1) est le routeur RSO de sortie. Ce n'est pas le cas car c'est le routeur G, et non le routeur E, donc on passe à l'étape E7 et au deuxième cycle de détermination.

Lors de cette étape E7, le routeur RDE de début (c=2) est le routeur DRCO(c=1), c'est-à-dire le routeur G.

Lors de l'étape E5 du deuxième cycle qui fait suite à l'étape E7, à partir du routeur RDE(c=2), vers le routeur RSO de sortie, le routeur RTR identifie le routeur DRCO(c=2). DRCO(c=2) est le dernier routeur sur le chemin CS de secours, entre RDE(c=2) et RSO pour lequel tous les liens et routeurs y compris DRCO(c=2), entre le routeur RDE(c=2) et DRCO(c=2), sont communs au chemin CS de secours et à l'arbre SPT(RDE(c=2)). C'est-à-dire, dans la figure 4, commun au chemin A-B-D-G-F-E et à l'arbre SPT(G). Dans cet exemple et pour ce deuxième cycle, il s'agit du routeur E.

Lors de l'étape E6 du deuxième cycle, le routeur RTR vérifie si le routeur DRCO(c=2) est le routeur RSO de sortie. C'est le cas car c'est le routeur E, c'est-à-dire le routeur RSO, donc les cycles de détermination sont arrêtés et le procédé passe à l'étape E8.

Dans le cas tunnel, il est à noter que si les paquets reçus par le routeur RTR sont des paquets IP, il n'est pas nécessaire d'utiliser le dernier tunnel car l'adresse IP de ces paquets permet de déterminer la destination.

Lorsque le nombre de cycles est élevé, donc lorsque le procédé détermine un grand nombre de point de terminaison, le routeur RTR peut ne pas être capable d'encapsuler un paquet dans tous les tunnels ou segments de tunnels correspondants.

Dans une variante de l'étape E8, tous les points de terminaison déterminés par le procédé ne sont pas utilisés. Utiliser les N premiers tunnels ou segments de tunnel permet d'éviter les micro-boucles sur la partie du chemin de secours utilisés par ces N tunnels ou segments de tunnel. Même si les micro-boucles ne sont pas évitées sur la totalité du chemin de secours, le résultat est un bon compromis.

Dans le cas segment, si le routeur RTR reçoit des paquets MPLS, il doit pousser le dernier segment car c'est lui qui indique la destination, c'est-à-dire le routeur RSO de sortie. Il est aussi à noter que si le routeur RTR reçoit des paquets IP, le dernier segment n'est pas nécessaire car l'adresse IP permet de déterminer la destination.

En relation avec la **figure 5**, on présente maintenant un exemple de structure d'un dispositif de détermination, selon un aspect de l'invention.

Le dispositif 100 de détermination met en œuvre le procédé de détermination dont différents modes de réalisation viennent d'être décrits.

Un tel dispositif 100 peut être mis en œuvre dans un routeur apte à router des paquets dans des réseaux de communication à commutation de paquets.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé de détermination selon l'invention. A l'initialisation, les instructions de code du programme d'ordinateur 110 sont par exemple chargées dans une mémoire RAM, avant d'être exécutées par le processeur de l'unité de traitement 130.

Notamment, un tel dispositif 100 comprend :
- un module 131 de calcul, apte à et configuré pour calculer un arbre SPT dit initial, sur la base d'une topologie antérieurement mémorisée, ledit arbre initial ayant pour racine un des routeurs de la topologie et ayant pour branches des chemins de coût minimum entre la racine et les autres routeurs de la topologie,
- une mémoire 132, apte à et configurée pour mémoriser des arbres SPT calculés,
- un module 133 d'identification, apte à et configuré pour identifier un routeur sur le chemin de secours, dit dernier routeur commun, pour lequel tous les liens et routeurs y compris ce dernier routeur commun, entre un routeur de début et ce dernier routeur commun, sont communs à un chemin de secours vers un routeur de sortie, et à un arbre SPT associé au routeur de début,
- un module 134 de détermination, apte à et configuré pour déterminer comme tunnel ou segment de tunnel à utiliser, celui permettant d'aller du routeur de début vers le dernier routeur commun identifié le long du chemin de secours, afin d'éviter aux paquets transitant vers le dernier routeur commun identifié d'entrer dans une micro-boucle causée par un événement ayant modifié la topologie et ayant déterminé le chemin de secours.

Les modules ci-dessus peuvent être des modules matériels ou logiciels, intégrés ou non dans le processeur de l'unité de traitement 130.

Le dispositif 100 peut être compris dans un routeur ROU comprenant un module 140 de commutation et d'encapsulation de paquets PKT, reçus par des ports d'entrée p et encapsulés puis émis par des ports de sortie p'.

Les exemples de réalisation de l'invention qui viennent d'être présentés ne sont que quelques-uns des modes de réalisation envisageables. Même si ces exemples n'utilisent qu'un nombre réduit de routeurs et de liens pour la commodité des démonstrations, l'invention est conçue pour résoudre efficacement le problème des micro-boucles dans un réseau de communication de paquets pouvant comprendre un grand nombre de routeurs et de liens, sans impacter le fonctionnement des routeurs.

A titre d'exemple, si 1 à 5 µs par nœud sont nécessaire au calcul d'un arbre SPT, l'étape de calcul de tous les arbres SPT dans un réseau de 1000 routeurs prendra de 1 à 5 s. Ceci implique que si plusieurs pannes ou autres événements impactant la topologie se suivent, le procédé fonctionne de façon optimale malgré ces événements, tant que l'intervalle entre eux reste supérieur à 5 s, sachant qu'il fonctionne au moins partiellement même si l'intervalle est inférieur.

## Revendications

1. **Procédé** de détermination d'un point de terminaison d'au moins un tunnel ou segment de tunnel, dans un réseau à commutation de paquets, le réseau comprenant un ensemble de routeurs (A, B, C, D, E, F, G) et des liens entre eux, chaque lien ayant un coût associé, l'ensemble de routeurs et les liens formant une topologie du réseau dite antérieure,
un routeur de transit (RTR) compris dans l'ensemble recevant des paquets destinés à un routeur de sortie (RSO) compris dans l'ensemble,
un événement modifiant (E2) la topologie antérieure en une topologie du réseau dite postérieure,
un chemin de secours entre le routeur de transit et le routeur de sortie étant calculé (E3) pour les paquets sur la base de la topologie postérieure,
le procédé comprenant l'étape (E1) suivante, antérieure à l'événement :
• pour chacun des routeurs de l'ensemble, calcul d'un arbre dit initial (SPT(A), SPT(B), SPT(C), SPT(D), SPT(E), SPT(F), SPT(G)), sur la base de la topologie antérieure, ledit arbre initial ayant pour racine ledit chacun des routeurs et ayant pour branches des chemins de coût minimum entre la racine et les autres routeurs de l'ensemble,
le procédé étant **caractérisé en ce qu'**il comprend en outre au moins un cycle des étapes suivantes, postérieures à l'événement :
• sélection (E4, E7) d'un routeur sur le chemin de secours, dit routeur de début (RDE(c=1), RDE(c=2)),
• à partir du routeur de début, vers le routeur de sortie le long du chemin de secours, identification (E5) d'un routeur, dit dernier routeur commun (DRCO(c=1), DRCO(c=2)), pour lequel tous les liens et routeurs y compris lui-même, entre le routeur de début et lui-même, sont communs au chemin de secours et à l'arbre initial associé au routeur de début, et, si ce dernier routeur commun est différent du routeur de début,
• détermination (E6) du point de terminaison du tunnel ou segment de tunnel comme étant le dernier routeur commun identifié, le tunnel ou segment de tunnel étant destiné à éviter aux paquets transitant entre le routeur de début et le dernier routeur commun identifié d'entrer dans une micro-boucle causée par l'événement, le routeur de début sélectionné lors du premier cycle étant le routeur de transit ou le routeur adjacent au routeur de transit sur le chemin de secours.

2. **Procédé** de détermination selon la revendication 1, où le chemin de secours est de coût minimum.

3. **Procédé** de détermination selon l'une des revendications précédentes, où le routeur de début sélectionné est le point de terminaison déterminé lors du cycle précédent, si le cycle n'est pas le premier.

4. **Procédé** de détermination selon l'une des revendications précédentes, où, si le dernier routeur commun identifié est le routeur de début, alors le point de terminaison est déterminé comme étant le routeur adjacent au routeur de début sur le chemin de secours, vers le routeur de sortie.

5. **Procédé** de détermination selon l'une des revendications précédentes, comprenant en outre une étape (E8) d'ajout où, pour chaque point de terminaison déterminé lors d'un cycle, une instruction est ajoutée à une table de commutation, l'instruction étant une instruction d'encapsulation des paquets à destination du routeur de sortie dans un tunnel correspondant au point de terminaison.

6. **Procédé** de détermination selon l'une des revendications précédentes, où le type du tunnel fait partie d'un groupe comprenant au moins:
• tunnel MPLS;
• tunnel "Segment Routing";
• tunnel IP.

7. **Procédé** de détermination selon l'une des revendications précédentes, où l'événement modifiant la topologie antérieure est dit événement négatif et fait partie d'un groupe comprenant:
• augmentation du coût associé à au moins un lien ou à un préfixe IP;
• disparition d'au moins un lien ou d'un préfixe IP.

8. **Procédé** de détermination selon l'une des revendications précédentes, où l'événement modifiant la topologie antérieure est dit événement positif et fait partie d'un groupe comprenant:
• diminution du coût associé à au moins un lien ou à un préfixe IP;
• apparition d'au moins un lien ou d'un préfixe IP multi-homé.

9. **Procédé** de détermination selon la revendication 7, où l'événement est un événement négatif et les cycles sont exécutés entièrement même si un nouvel événement négatif modifie la topologie postérieure avant la fin desdits cycles.

10. Dispositif de détermination d'un point de terminaison d'au moins un tunnel dans un réseau à commutation de paquets, apte à mettre en œuvre un procédé selon l'une des revendications 1 à 9.

11. **Routeur de transit** dans un réseau à commutation de paquets, apte à acheminer des paquets, le réseau comprenant un ensemble de routeurs et des liens entre eux, chaque lien ayant un coût associé, l'ensemble de routeurs et les liens formant une topologie du réseau dite antérieure,
le routeur de transit (ROU) recevant des paquets destinés à un routeur de sortie, et étant un point d'encapsulation d'un tunnel,
un événement modifiant la topologie antérieure en une topologie du réseau dite postérieure,
un chemin de secours de coût minimum étant calculé pour les paquets sur la base de la topologie postérieure,
le routeur de transit comprenant un dispositif conforme à la revendication 10.

12. **Programme d'ordinateur, caractérisé en ce qu'**il comprend des instructions pour la mise en œuvre des étapes du procédé de détermination d'un point de terminaison d'au moins un tunnel dans un réseau à commutation de paquets selon la revendication 1, lorsque ce procédé est exécuté par un processeur.

13. **Support d'enregistrement** lisible par un routeur sur lequel est enregistré le programme selon la revendication 12.

## Patentansprüche

1. Bestimmungsverfahren eines Abschlusspunkts mindestens eines Tunnels oder Tunnelsegments in einem Paketvermittlungsnetzwerk, wobei das Netzwerk eine Einheit von Routern (A, B, C, D, E, F, G) und Links zwischen ihnen enthält, wobei jeder Link zugeordnete Kosten hat, wobei die Einheit von Routern und die Links eine sogenannte vorherige Topologie des Netzwerks formen, wobei ein in der Einheit enthaltener Transitrouter (RTR) Pakete empfängt, die für einen in der Einheit enthaltenen Ausgangsrouter (RSO) bestimmt sind,
wobei ein Ereignis die vorherige Topologie in eine so genannte nachfolgende Topologie des Netzwerks ändert (E2), wobei ein Hilfspfad für die Pakete zwischen dem Transitrouter und dem Ausgangsrouter auf der Basis der nachfolgenden Topologie berechnet wird (E3),
wobei das Verfahren den folgenden Schritt (E1) vor dem Ereignis enthält:
• für jeden der Router der Einheit, Berechnung eines so genannten Anfangsbaums (SPT(A), SPT(B), SPT(C), SPT(D), SPT(E), SPT(F), SPT(G)) auf der Basis der vorherigen Topologie, wobei der Anfangsbaum als Wurzel den jeden der Router hat und als Zweige Pfade minimaler Kosten zwischen der Wurzel und den anderen Routern der Einheit hat,
wobei das Verfahren **dadurch gekennzeichnet ist, dass** es außerdem mindestens einen Zyklus der folgenden Schritte nach dem Ereignis enthält:
• Auswahl (E4, E7) eines Routers auf dem Hilfspfad, Anfangsrouter genannt (RDE(c=1), RDE(c=2)),
• ausgehend vom Anfangsrouter, zum Ausgangsrouter entlang des Hilfspfads, Identifizierung (E5) eines Routers, letzter gemeinsamer Router genannt (DRCO(c=1), DRCO(c=2)), für den alle Links und Router, einschließlich er selbst, zwischen dem Anfangsrouter und ihm selbst dem Hilfspfad und dem dem Anfangsrouter zugeordneten Anfangsbaum gemeinsam sind, und, wenn dieser letzte gemeinsame Router sich vom Anfangsrouter unterscheidet,
• Bestimmung (E6) des Abschlusspunkts des Tunnels oder Tunnelsegments als der identifizierte letzte gemeinsame Router, wobei der Tunnel oder das Tunnelsegment dazu bestimmt ist, zu verhindern, dass die zwischen dem Anfangsrouter und dem identifizierten letzten gemeinsamen Router durchgehenden Pakete in eine vom Ereignis verursachte Mikroschleife eintreten,
wobei der im ersten Zyklus ausgewählte Anfangsrouter der Transitrouter oder der dem Transitrouter auf dem Hilfspfad benachbarte Router ist.

2. Bestimmungsverfahren nach Anspruch 1, wobei der Hilfspfad minimale Kosten hat.

3. Bestimmungsverfahren nach einem der vorhergehenden Ansprüche, wobei der ausgewählte Anfangsrouter der im vorhergehenden Zyklus bestimmte Abschlusspunkt ist, wenn der Zyklus nicht der erste ist.

4. Bestimmungsverfahren nach einem der vorhergehenden Ansprüche, wobei, wenn der identifizierte letzte gemeinsame Router der Anfangsrouter ist, der Abschlusspunkt als der dem Anfangsrouter auf dem Hilfspfad benachbarte Router zum Ausgangsrouter bestimmt wird.

5. Bestimmungsverfahren nach einem der vorhergehenden Ansprüche, das außerdem einen Hinzufügungsschritt (E8) enthält, in dem für jeden in einem Zyklus bestimmten Abschlusspunkt einer Umschalttabelle ein Befehl hinzugefügt wird, wobei der Befehl ein Einkapselungsbefehl der für den Ausgangsrouter bestimmten Pakete in einem dem Abschlusspunkt entsprechenden Tunnel ist.

6. Bestimmungsverfahren nach einem der vorhergehenden Ansprüche, wobei der Typ des Tunnels Teil einer Gruppe ist, die mindestens enthält:
• MPLS-Tunnel;
• Tunnel "Segment Routing";
• IP-Tunnel.

7. Bestimmungsverfahren nach einem der vorhergehenden Ansprüche, wobei das die vorherige Topologie verändernde Ereignis als negatives Ereignis bezeichnet wird und Teil einer Gruppe ist, die enthält:
• Erhöhung der mindestens einem Link oder einem IP-Präfix zugeordneten Kosten;
• Verschwinden mindestens eines Links oder eines IP-Präfix.

8. Bestimmungsverfahren nach einem der vorhergehenden Ansprüche, wobei das die vorherige Topologie verändernde Ereignis positives Ereignis genannt wird und Teil einer Gruppe ist, die enthält:
• Verringerung der mindestens einem Link oder einem IP-Präfix zugeordneten Kosten;
• Auftreten mindestens eines Links oder eines Multi-Homed-IP-Präfix.

9. Bestimmungsverfahren nach Anspruch 7, wobei das Ereignis ein negatives Ereignis ist und die Zyklen vollständig ausgeführt werden, selbst wenn ein neues negatives Ereignis die nachfolgende Topologie vor dem Ende der Zyklen verändert.

10. Vorrichtung zur Bestimmung eines Abschlusspunkts mindestens eines Tunnels in einem Paketvermittlungsnetzwerk, die ein Verfahren nach einem der Ansprüche 1 bis 9 durchführen kann.

11. Transitrouter in einem Paketvermittlungsnetzwerk, der Pakete befördern kann, wobei das Netzwerk eine Einheit von miteinander verbundenen Routern und Links enthält, wobei jeder Link zugeordnete Kosten hat, wobei die Einheit von Routern und die Links eine so genannte vorherige Topologie des Netzwerks bilden,
wobei der Transitrouter (ROU) für einen Ausgangsrouter bestimmte Pakete empfängt und ein Einkapselungspunkt eines Tunnels ist,
wobei ein Ereignis die vorherige Topologie in eine so genannte nachfolgende Topologie des Netzwerks verändert, wobei ein Hilfspfad mit minimalen Kosten für die Pakete auf der Basis der nachfolgenden Topologie berechnet wird, wobei der Transitrouter eine Vorrichtung entsprechend Anspruch 10 enthält.

12. Computerprogramm, **dadurch gekennzeichnet, dass** es Befehle zur Durchführung der Schritte des Bestimmungsverfahrens eines Abschlusspunkts mindestens eines Tunnels in einem Paketvermittlungsnetzwerk nach Anspruch 1 enthält, wenn dieses Verfahren von einem Prozessor ausgeführt wird.

13. Router-lesbarer Aufzeichnungsträger, auf dem das Programm nach Anspruch 12 gespeichert ist.

## Claims

1. **Method** for determining a termination point of at least one tunnel or tunnel segment in a packet switching network, the network comprising a set of routers (A, B, C, D, E, F, G) and links between them, each link having an associated cost, the set of routers and the links forming a network topology referred to as "previous topology",
a transit router (RTR) included in the set receiving packets destined for an exit router (RSO) included in the set,
an event (E2) modifying the previous topology to a network topology referred to as "subsequent topology",
a backup path between the transit router and the exit router being calculated (E3) for the packets on the basis of the subsequent topology,
the method comprising the following step (E1), prior to the event:
• for each of the routers in the set, calculation of a tree referred to as "initial tree" (SPT(A), SPT(B), SPT(C), SPT(D), SPT(E), SPT(F), SPT(G)), on the basis of the previous topology, said initial tree having as root said each of the routers and having as branches paths of minimum cost between the root and the other routers in the set,
the method being **characterized in that** it additionally comprises at least one cycle of the following steps,
after the event:
• selection (E4, E7) of a router on the backup path, referred to as "start router" (RDE(c=1), RDE(c=2)),
• from the start router, to the exit router along the backup path, identification (E5) of a router, referred to as "last common router" (DRCO(c=1), DRCO(c=2)), for which all the links and routers including itself, between the start router and itself, are common to the backup path and to the initial tree associated with the start router, and, if this last common router is different from the start router,
• determination (E6) of the termination point of the tunnel or tunnel segment as being the identified last common router, the tunnel or tunnel segment being intended to save the packets that are transiting between the start router and the identified last common router from entering a microloop caused by the event,
the start router selected during the first cycle being the transit router or the router adjacent to the transit router on the backup path.

2. Determination **method** according to Claim 1, wherein the backup path is of minimum cost.

3. Determination **method** according to one of the preceding claims, wherein the selected start router is the termination point determined during the previous cycle, if the cycle is not the first.

4. Determination **method** according to one of the preceding claims, wherein, if the identified last common router is the start router, then the termination point is determined as being the router adjacent to the start router on the backup path, toward the exit router.

5. Determination **method** according to one of the preceding claims, additionally comprising an addition step (E8) wherein, for each termination point determined during a cycle, an instruction is added to a switching table, the instruction being an instruction for encapsulating packets destined for the exit router in a tunnel corresponding to the termination point.

6. Determination **method** according to one of the preceding claims, wherein the type of the tunnel forms part of a group comprising at least:
• MPLS tunnel;
• Segment Routing tunnel;
• IP tunnel.

7. Determination **method** according to one of the preceding claims, wherein the event modifying the previous topology is referred to as a "negative event" and forms part of a group comprising:
• an increase in the cost associated with at least one link or with an IP prefix;
• disappearance of at least one link or of an IP prefix.

8. Determination **method** according to one of the preceding claims, wherein the event modifying the previous topology is referred to as a "positive event" and forms part of a group comprising:
• a reduction in the cost associated with at least one link or with an IP prefix;
• appearance of at least one link or of a multi-homed IP prefix.

9. Determination **method** according to Claim 7, wherein the event is a negative event and the cycles are executed fully, even if a new negative event modifies the subsequent topology before the end of said cycles.

10. **Device** for determining a termination point of at least one tunnel in a packet switching network, suitable for implementing a method according to one of Claims 1 to 9.

11. **Transit router** in a packet switching network, suitable for routing packets, the network comprising a set of routers and links between them, each link having an associated cost, the set of routers and the links forming a network topology referred to as "previous topology",
the transit router (ROU) receiving packets destined for an exit router, and being an encapsulation point of a tunnel,
an event modifying the previous topology to a network topology referred to as "subsequent topology",
a backup path of minimum cost being calculated for the packets on the basis of the subsequent topology,
the transit router comprising a device in accordance with Claim 10.

12. **Computer program, characterized in that** it comprises instructions for implementing the steps of the method for determining a termination point of at least one tunnel in a packet switching network according to Claim 1, when this method is executed by a processor.

13. **Recording medium** that can be read by a router, on which the program according to Claim 12 is recorded.
